Europäisches Patentamt

European Patent Office

Office européen des brevets

(19)

(11) **EP 1 111 354 A1**

(12) **EUROPÄISCHE PATENTANMELDUNG**

(43) Veröffentlichungstag:
  **27.06.2001 Patentblatt 2001/26**

(51) Int Cl.⁷: **G01J 1/00**, G01J 5/00,
  G01W 1/00, G01N 21/53

(21) Anmeldenummer: **99124735.4**

(22) Anmeldetag: **13.12.1999**

(84) Benannte Vertragsstaaten:
  **AT BE CH CY DE DK ES FI FR GB GR IE IT LI LU
  MC NL PT SE**
  Benannte Erstreckungsstaaten:
  **AL LT LV MK RO SI**

(71) Anmelder: **Deutsches Zentrum für Luft- und
  Raumfahrt e.V
  53127 Bonn (DE)**

(72) Erfinder:
  • **Schreier, Franz, Dr.
    82152 Planegg (DE)**
  • **Schimpf, Birger
    82205 Gilching (DE)**

(74) Vertreter: **von Kirschbaum, Albrecht, Dipl.-Ing.
  Patentanwalt
  Postfach 1520
  82102 Germering (DE)**

(54) **Verfahren zur Durchführung einer Strahlungstransportrechnung**

(57) Das erfindungsgemäße Verfahren zur Durchführung von Strahlungstransportrechnungen wird über eine graphische, betriebssystemunabhängige Benutzeroberfläche mittels einer CGI(Common Gateway Interface)-Schnittstelle zwischen einem Web-Browser an einem Arbeitsplatz-Rechner (1) des Nutzers (2) und einem Web-Server-Rechner (3) abgewickelt. Dazu werden die Parameterangaben auf dem Arbeitsplatz-Rechner des Nutzers auf einem HTML-Formblatt abgefragt und zu einem Web-Server-Rechner geschickt, auf dem dann mit diesen Parameterangaben das Strahlungstransport-Rechenprogramm, z.B. FASCODE oder MODTRANS, ausgeführt wird. Die berechneten Spektren sowie die Standard-Ausgabedatei werden zum Arbeitsplatz-Rechner des Nutzers zurückgeschickt und diesem dort auf einer automatisch erstellten HTML-Seite präsentiert. Das Verfahren nach der Erfindung ist zur Durchführung von Strahlungstransportrechnungen z.B. in der Meteorologie, Klima- und Ozonforschung und bei der berührungslosen spektroskopischen Messung an gasförmigen Medien verwendbar.

Fig. 7

EP 1 111 354 A1

**Beschreibung**

Die Erfindung betrifft ein Verfahren zur Durchführung einer Strahlungstransportrechnung, für welche die den Strahlungstransfer beeinflussenden Bedingungen von einem Nutzer spezifiziert und als Parameter für die Ausführung eines Strahlungstransport-Rechenprogramms angegeben werden.

Strahlungstransport-Rechenprogramme sind ein wichtiges Werkzeug in vielen Bereichen der grundlagenorientierten Forschung, z.B. in der Meteorologie und in der Klima- und Ozonforschung, sowie in der anwendungsorientierten Forschung, und hierbei insbesondere bei berührungslosen spektroskopischen Meßverfahren zur Untersuchung gasförmiger Medien, z.B. von Triebwerksabgasen, bei Schornstein-Messungen und bei Ferner-kundungen. Neben einer Vielzahl von Programmen, die auf konkrete, eng eingegrenzte Anwendungen zugeschnitten sind, existieren einige wenige allgemein einsetzbare Programme.

Die bekanntesten und verbreitetsten Strahlungstransportprogramme für den Millimeter-, Infrarot- und Ultraviolett-Spektralbereich sowie für den sichtbaren Spektralbereich sind die seit Jahren am Phillips-Laboratory (früher Air Force Geophysics Laboratory, Mass., USA) entwickelten Programme LOWTRAN bzw. MODTRAN und FASCODE. Bei LOWTRAN und MODTRAN handelt es sich um ein niedrigauflösendes Bandenmodell. MODTRAN ist eine Weiterentwicklung von LOWTRAN und vollständig kompatibel zu LOWTRAN; insbesondere kann es durch Wahl einer entsprechender Option im LOWTRAN-Modus betrieben werden (US-Patente 5,075,856 und 5,315,513).

Bei FASCODE handelt es sich um ein hochauflösendes Linie-für-Linie Modell (S.A. Clough et al.: FASCOD3: Spectral Simulation. In J. Lenoble and J.F. Geleyn, Editors, IRS'88: Current Problems in Atmospheric Radiation. A. Deepak Publ., 1988).

Bei den Linie-für-Linie Modellen hat außerdem noch GENLN2 eine gewisse Verbreitung gefunden.

Strahlungstransfer wird bestimmt durch Absorptions-, Emissions- und Streu-Prozesse des Lichts an Atomen, Molekülen und Aerosolen. Mathematisch wird dies beschrieben durch die Strahlungstransportgleichungen, insbesondere durch das Beer-Bouguer-Lambert-Gesetz und die Schwarzschildgleichung. Hierbei ist die Streuung für die weitere Diskussion ohne Relevanz und wird daher im folgenden vernachlässigt.

$$\tau(v, s_0, s) = \exp\left(-\int_{s_0}^{s} ds'\, k\big(v,\, p(s'),\, T(s')\big) n(s')\right) \qquad (1)$$

$$I(v, s) = I_0(v)\tau(v; s_0, s) + \int_{s_0}^{s} ds'\, B\big(v, T(s')\big)\frac{\partial \tau(v; s', s)}{\partial s'} \qquad (2)$$

Hierbei sind $\tau$ und $I$ die Transmission bzw. Strahldichte (Intensität) als Funktion der Wellenzahl $v$, $k$ der Absorptionskoeffizient, $B(v,T)$ die Planckfunktion zur Temperatur $T$, und $s'$ die Wegkoordinate entlang des Sichtstrahles mit dem Beobachter an der Stelle $s$. Die Lösung dieser (Integral-)Gleichungen ist wesentlicher Bestandteil der Strahlungstransportprogramme.

Zur Durchführung einer Strahlungstransportrechnung muß der Nutzer die gesamten den Strahlungstransfer beeinflussenden Bedingungen spezifizieren. Aufgrund der hohen Flexibilität von FASCODE bzw. MODTRAN erfordert dies eine Vielzahl von Angaben, wobei zu beachten ist, daß FASCODE bzw. MODTRAN hauptsächlich für atmosphärische Anwendungen entwickelt wurden. Es ist mit diesen Programmen jedoch ebenso möglich, Strahlungstransfer in beliebigen anderen gasförmigen Medien zu berechnen.

Die Angaben betreffen unter anderen die Beobachtungsgeometrie, also z.B. die Beobachter-Position, die Blickrichtung und dergleichen.

Es sind auch Angaben zu machen bezüglich der Charakterisierung des Gasmediums bzw. der Atmosphäre, also Temperatur, Druck und Zusammensetzung (Gaskonzentrationen und/oder Aerosoldichten oder dergleichen). Im allgemeinen Fall eines inhomogenen Mediums sind diese Größen ortsabhängig und daher entlang des Weges zu spezifizieren. Für einfache atmosphärische Anwendungen bieten FASCODE bzw. MODTRAN die Möglichkeit, die atmosphärischen Bedingungen durch Wahl eines Standard-Atmosphärenmodells (z.B. Sommer oder Winter mittlerer geographischer Breite) zu spezifizieren: Die entsprechenden Daten (Druck, Temperatur, Dichten etc.) sind intern in FASCODE bzw. MODTRAN implementiert.

Bei atmosphärischen Anwendungen, bei denen der Nutzer eigene Daten, z.B. gemessene Druck-, Temperatur-, Dichteprofile, für die Strahlungstransportrechnung verwenden will bzw. für andere Strahlungstransportrechnungen in sonstigen gasförmigen Medien, z.B. in einem Abgasstrahl, muß der Nutzer diese Daten in der FASCODE- bzw. MODTRAN-Eingabedatei eingeben.

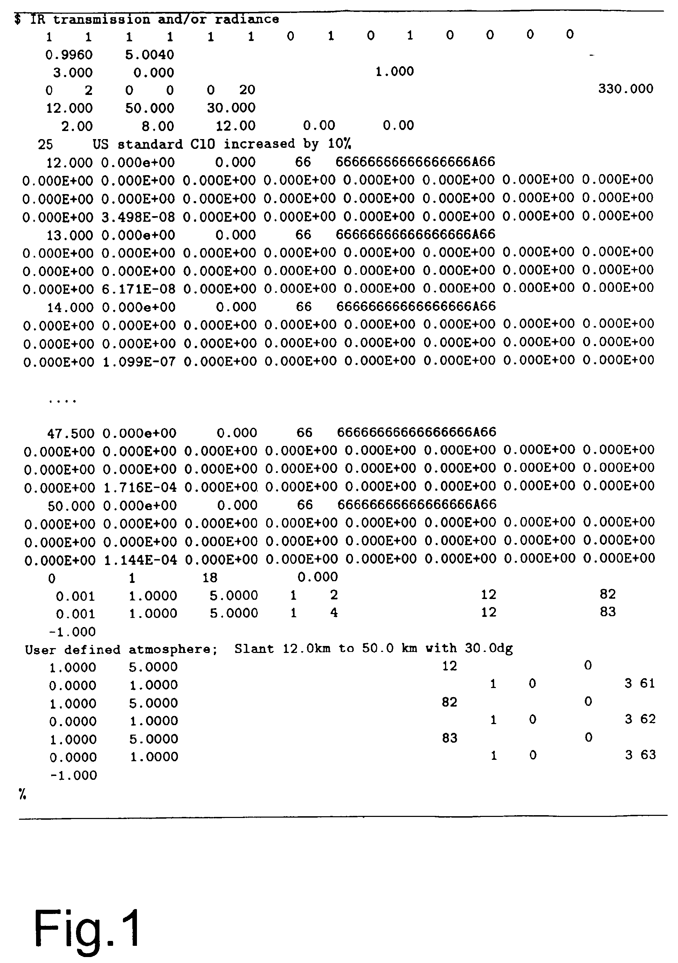

In diesem Zusammenhang wird auf Fig.1 hingewiesen, in welcher ein Beispiel für eine FASCODE-Eingabedatei dargestellt ist. Dieses Beispiel beschreibt einen Schrägweg von 12 auf 50 km Höhe mit einem Winkel von 30°. Für ClO (Molekül-Nr.18) werden eigene Daten verwendet; für alle anderen Moleküle sowie Druck und Temperatur wird ein US-Standard-Atmosphärenprofil (Modell-Nr. 6) verwendet. Es werden drei Strahldichte-Spektren berechnet: monochromatisch sowie gefaltet mit einer Gauß- und sinc-Funktion der Breite 0,001 cm$^{-1}$. Die bei den beiden Faltungen erzeugten Spektren werden auf Temporärdateien TAPE82 und TAPE83 zwischengespeichert; abschließend werden alle 3 Strahldichte-Spektren auf die Dateien TAPE61, TAPE62 und TAPE63 geschrieben.

Die Angaben zur Durchführung einer Strahlungstransportrechnung betreffen auch eine Spezifikation des Hintergrunds, insbesondere dessen Temperatur und Emissivität. Angaben sind auch bezüglich des Spektralbereichs (untere und obere Grenze in Wellenzahlen, cm$^{-1}$) zu machen.

Auch eine Instrument(en)-Charakterisierung ist anzugeben. FASCODE bietet die Möglichkeit, das zunächst berechnete hochaufgelöste, sogenannte monochromatische Spektrum durch Faltung mit verschiedenen Response-Funktionen in der Auflösung zu degradieren, um instrumentelle Effekte, z.B. eines Fourier-Transform-Spektrometers, in der Modellierung eines Spektrums zu berücksichtigen. Analog können spektral abhängige Empfindlichkeiten durch Multiplikation mit verschiedenen Filterfunktionen berücksichtigt werden. Entsprechende Programmteile können vom Nutzer durch zusätzliche optionale Angaben in der Eingabedatei aufgerufen werden.

Zusätzlich kann der Nutzer verschiedene weitere Optionen wählen, welche die zu Grunde liegenden physikalischen Annahmen bzw. Modelle beeinflussen sowie Anforderungen an numerische Näherungen bzw. Prozeduren setzen bzw. ändern.

Die bekannten Verfahren zur Durchführung weisen gravierende Nachteile auf. Alle die Strahlungstransportrechnung beeinflussenden Angaben müssen in einer nichtkommentierten bzw. nicht selbsterklärenden formatierten Eingabedatei gegeben werden, welche von FASCODE bzw. MODTRAN in Fortransprache formatiert gelesen wird. Da FASCODE bzw. MODTRAN die Nutzerangaben aus einer formatierten Eingabedatei liest, müssen alle Eingabeparameter gesetzt werden, auch wenn der Nutzer nur einige wenige Parameter, z.B. die Grenzen des gewünschten Spektralbereichs, die Geometrie des Strahlengangs und die Nummer der gewünschten Modellatmosphäre, individuell setzen will und ansonsten sinnvolle Defaulteinstellungen übernehmen möchte.

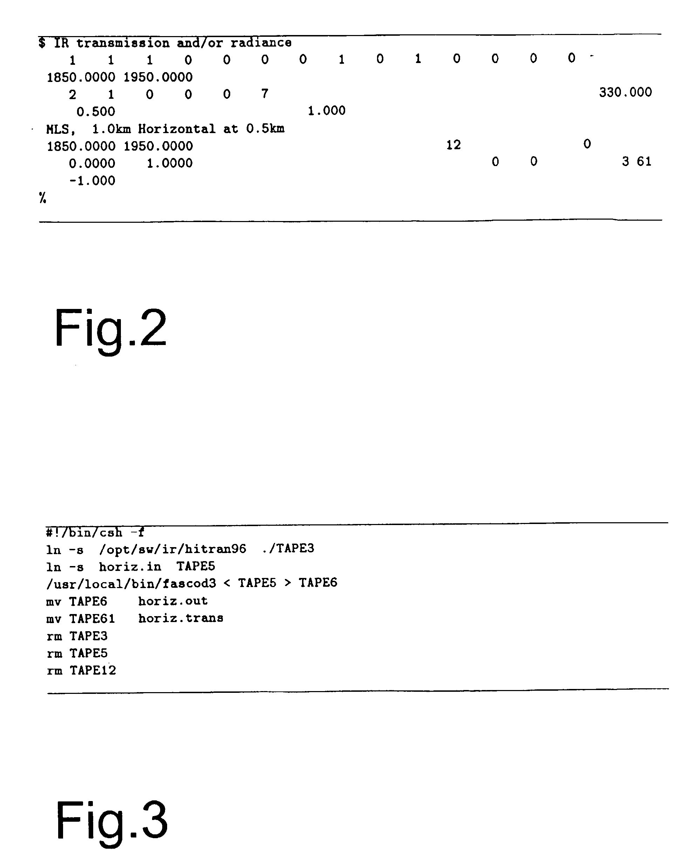

Dies ist insbesondere für neue und gelegentliche Nutzer dieser Strahlungstransport-Rechenprogramme eine wesentliche Erschwernis, vgl. dazu das Beispiel in Fig.2. Fig.2 zeigt ein Beispiel für eine einfache FASCODE-Eingabedatei. Das Dollarzeichen in Zeile 1 sowie das Prozentzeichen in der letzten Zeile sind Steuerzeichen, der Rest der ersten Zeile sowie Zeile 6 sind Kommentar. In Zeile 2 werden verschiedene Schalter gesetzt, in Zeile 3 wird der zu berechnende Spektralbereich spezifiziert, die Zeilen 4 und 5 dienen der Definition der atmosphärischen Bedingungen: Ein horizontaler Weg (Schalterwert 1 in der 4. Zeile) von 1,000 km in einer Modellatmosphäre #2 (Sommer mittlerer geographischer Breite) mit 7 IR-aktiven Molekülen und einem C02-Volumenmischungsverhältnis von 330 ppm.

Es wird lediglich die monochromatische Transmission berechnet (nicht jedoch die Strahldichte, 5. Schalter in Zeile 2 ist 0) und diese (intern gespeichert im Binärformat auf einer Temporärdatei TAPE12) soll auf einer formatierten (ASCII)-Datei TAPE61 ausgegeben werden.

FASCODE benötigt zusätzlich eine spektroskopische Linienparameter-Datenbasis. Standardmäßig ist dies die HITRAN-Datenbasis, welche als formatierte ASCII-Datei auf CD-ROM (ca. 100 Megabyte) erhältlich ist. FASCODE liest diese Datei jedoch in einem eigenen, binären Format, d.h. HITRAN muß vor der eigentlichen Strahlungstransportrechnung in einem separaten Preprozessor-Programm umformatiert werden.

In vielen Fällen ist es jedoch wünschenswert, spektroskopische Daten aus verschiedenen Datenbasen gleichzeitig zu nutzen, z.B. für Simulationen der IR-Strahlung eines heißen Abgasstrahls $H_2O$-, $C0_2$-, CO-Daten aus der neueren HITEMP-Daten-basis und Daten anderer Moleküle aus HITRAN. In der gegenwärtigen FASCODE-Implementierung ist dies ohne aufwendige Pre-prozessierung nicht möglich.

Aufgrund der Implementierung von FASCODE bzw. MODTRAN müssen alle Dateien, die in den verschiedenen Phasen des Programmablaufs benötigt werden, im gleichen Verzeichnis liegen. Dies ist sinnvoll für job-spezifische Dateien, z.B. für Ein- und Ausgabedateien sowie für Dateien mit den berechneten Spektren, jedoch nicht für jobunabhängige Dateien, wie z.B. die HITRAN-Datenbasis. Insbesondere aufgrund der Größe der HITRAN-Datenbasis ist es auch nicht sinnvoll, diese in jedes Verzeichnis zu kopieren, in dem Berechnungen durchgeführt werden. Unter UNIX bietet sich die Möglichkeit eines Links im File-System.

Fig.3 zeigt ein Shell-Script, welches unter UNIX die in Fig.2 spezifizierte FASCODE-Strahlungstransportrechnung steuern würde. Dabei wird angenommen, daß der Nutzer dieses Shell-Script im aktuellen Verzeichnis aufruft. Daher wird die HITRAN-Datenbasis in dieses Verzeichnis "gelinkt" (kopiert); die vom Nutzer unter dem Namen horiz. in angelegte Eingabedatei (vgl. Fig.2) wird ebenfalls als TAPE5 gelinkt. Anschließend wird das ausführbare FASCODE-Programm aufgerufen und die Ein- und Ausgabe-Dateien werden umgelenkt. Schließlich werden die Ausgabedateien auf "sinnvolle" Namen umbenannt und Temporärdateien gelöscht.

Neben den von FASCODE benötigten Input-Dateien (Nutzer-Eingabedatei und spektrale Datenbasis) und den von FASCODE erzeugten Dateien ("Standard Output" und je eine Datei für jedes berechnete Spektrum) erzeugt FASCODE eine Reihe von Temporärdateien zur Zwischenspeicherung. In der gegenwärtigen Implementierung unter UNIX werden diese Dateien nach Job-Ende nicht gelöscht und müssen daher vom Nutzer entfernt werden.

Historisch aufgrund der Entwicklung von FASCODE bzw. MODTRAN auf Mainframes bedingt, sind alle benutzten Dateien (Eingabe-, Ausgabe-, Temporärdateien) in ihren Namen fest vorgegeben. Diese Namen setzen sich zusammen aus "TAPE", gefolgt von einer ein oder zweistelligen Integerzahl, die der Datei die Nummer einer Ein-/Ausgabeeinheit zuordnet (Fortran Logical Unit). Neben TAPE5 - Eingabedatei mit Nutzerangaben und TAPE6 - Ausgabedatei (Standard Output) sind dies für FASCODE:

TAPE3 - Binärversion der (HITRAN-)Spektralparameter-Datenbasis, TAPE9, TAPE10, TAPE11, TAPE12, TAPE14, TAPE20 - Temporärdateien. Jedes berechnete Spektrum wird auf eine eigene Datei geschrieben mit Namen TAPEnn, wobei nn eine vom Nutzer in der Eingabedatei zu spezifizierende Integerzahl ist. Dabei ist darauf zu achten, daß bereits genutzte Ein-/Ausgabe-Einheiten nicht mehr zur Verfügung stehen.

MODTRAN schreibt alle berechneten Spektren in zwei Dateien: TAPE7 und TAPE8.

Es ist naheliegend, die fehleranfällige Erstellung der Eingabedatei über eine graphische Benutzeroberfläche (Graphical User Interface, GUI) zu steuern und die Eingabedatei sowie gegebenenfalls ein Script, welches die von FASCODE bzw. MODTRAN benötigten Dateien "linkt", automatisch zu erzeugen. Entsprechende Programme PcLnWin für FASCODE und PCModWin für MODTRAN wurden von der Firma ONTAR (http://www.ontar.com/) entwickelt. Diese Ansätze haben jedoch noch einige wesentliche Nachteile. Ein Betrieb ist nur für PCs unter DOS/Windows möglich und es ist keine GUI für andere Betriebssysteme (UNIX/LINUX, MAC etc.) ausführbar.

Es ist eine Installation auf jedem Rechner erforderlich, was einen enormen Zeitaufwand verlangt und nicht trivial ist. Es muß außerdem auf jedem Rechner die HITRAN-Datenbasis (ca. 100 MB) bereit gehalten werden, was zusätzlich eine Konvertierung der Datenbasis von ASCII in das Binärformat erfordert. Für das ausführbare Programm (Extension.exe) ist Festplattenplatz auf jedem Rechner nötig. Es bestehen auch beträchtliche Anforderungen an die CPU, den Arbeitsspeicher und an den Math-Co-Prozessor. Darüber hinaus bestehen eingeschränkte "QuickLooks" und Grafik-Möglichkeiten sowie eine beschränkte Genauigkeit der ASCII-Ausgabedateien.

Viele der für FASCODE getroffenen Aussagen können auch auf das neuere Strahlungstransport-Rechenprogramm GENLN2 übertragen werden. Obwohl die Dokumentation hierzu deutlich ausführlicher und verständlicher ist, bleibt dennoch die gerade für neue bzw. gelegentliche Nutzer wesentliche Hürde, einen Job vorzubereiten.

Aufgabe der Erfindung ist es daher, unter weitestgehender Vermeidung der vorstehend angeführten Nachteile ein Verfahren und ein System zur Unterstützung von Anwendern von Strahlungstransportrechnungen zu schaffen, mit dem Programme wie beispielsweise FASCODE, MODTRAN oder GENLN2 u.ä. betriebs-systemunabhängig betrieben werden können, wobei auch neue oder gelegentliche Nutzer durch eine einfache und intuitive Benutzerführung mittels einer graphischen Benutzeroberfläche unterstützt werden.

Gemäß der Erfindung, die sich auf ein Verfahren der eingangs genannten Art bezieht, wird diese Aufgabe dadurch gelöst, daß das Verfahren über eine graphische Benutzeroberfläche mittels einer CGI(Common Gateway Interface)-Schnittstelle zwischen einem Web-Browser an einem Arbeitsplatz-Rechner des Nutzers und einem Web-Server-Rechner abgewickelt wird, daß alle die Strahlungstransportrechnung definierenden Parameter in einer Folge von automatisch generierten Formblättern vom Nutzer auf dem Web-Browser seines Arbeitsplatz-Rechners spezifiziert werden, daß vom Web-Server-Rechner mit den vom Nutzer gegebenen Spezifikationen die für das Strahlungstransport-Rechenprogramm erforderliche Eingabedatei in einem vom Strahlungstransport-Rechenprogramm geforderten Format erstellt wird, daß über ein Systemkommando das Strahlungstransport-Rechenprogramm auf dem Web-Server-Rechner oder gegebenenfalls einem eigenen Compute-Server-Rechner aufgerufen wird, wobei gegebenenfalls zusätzlich erforderliche, auf dem Web-Server-Rechner gespeicherte Dateien an das Strahlungstransport-Rechenprogramm gekoppelt werden, und daß schließlich vom Web-Server-Rechner die dort errechneten Ergebnisse zum Arbeitsplatz-Rechner des Nutzers zurückgeschickt werden und dort auf einem automatisch generierten Dokument bereitgestellt werden.

Eine CGI-Schnittstelle erlaubt es, einem WWW-Browser, z.B. Netscape-Navigator, Internet-Explorer, über einen WWW-Server (http-Server, z.B. Apache) Programme auszuführen oder z.B. Daten abzurufen, wobei Browser und Server-Rechner über HTML-Dokumente, insbesondere Formblätter, kommunizieren. Bei dem erfindungsgemäßen Verfahren zur Durchführung von Strahlungstransportrechnungen werden die Angaben des Nutzers auf einem HTML-Formblatt abgefragt, zu einem Server-Rechner geschickt, die Schritte des Strahlungstransport-Rechenprogramms auf diesem Server-Rechner ausgeführt und schließlich die berechneten Spektren sowie die Standard-Ausgabedatei zum Client-Rechner beim Nutzer zurückgeschickt, wo sie diesem auf einer automatisch erstellten HTML-Seite präsentiert werden. Somit dient der Web-Browser auf dem Rechner des Nutzers als graphische, betriebssystemunabhängige Oberfläche für das auf dem Web-Server-Rechner installierte Strahlungstransport-Rechenprogramm.

Vorteilhafte Weiterbildungen des Verfahrens nach der Erfindung sind in den Unteransprüchen angegeben.

Die Erfindung und vorteilhafte Realisierungsmöglichkeiten davon werden im folgenden anhand von Zeichnungen weiter erläutert. Es zeigen:

Fig. 1      ein bereits vorher erläutertes Beispiel einer FASCODE-Eingabedatei in einem Ausschnitt,

Fig.2      ein ebenfalls bereits erläutertes Beispiel für eine einfache FASCODE-Datei,

Fig.3      ein bereits beschriebenes Beispiel für ein einfaches Shell-Script, das eine FASCODE-Rechnung steuert,

Fig.4      die Prinzipdarstellung eines CGI-Programms,

Fig.5      die Startseite eines Web-Interfaces für Strahlungstransportprogramme,

Fig.6      das zweite Formblatt eines Web-Interfaces für Strahlungstransportprogramme,

Fig.7      eine schematische Darstellung des Ablaufs der Durchführung einer Strahlungstransportrechnung mit Hilfe eines Web-Interfaces, und

Fig.8      das Ergebnis-Dokument eines Web-Interfaces für Strahlungstransport-Rechenprogramme.

CGI-Programme können in jeder beliebigen Programmiersprache geschrieben werden. Da Programme in Sprachen wie C, FORTRAN oder PASCAL jedoch erst kompiliert werden müssen, können sie nicht so flexibel auf die jeweiligen Anforderungen und System-Umgebungen, wie sie typisch bei CGI-Programmen wie hier auftreten, eingehen. Nach der Erfindung wird daher das CGI-Programm zur Steuerung des Web-Interfaces für die Strahlungstransportrechnung in einer Scriptsprache implementiert. Von den Scriptsprachen eignen sich vor allem PERL, PYTHON oder Tcl/Tk zur CGI-Programmierung. Da ein PYTHON-Script jedoch unabhängig von der Datenübertragungsmethode implementiert werden kann und zudem PYTHON-effiziente numerische Module enthält, wird bei dem Verfahren in vorteilhafter Weise PYTHON verwendet.

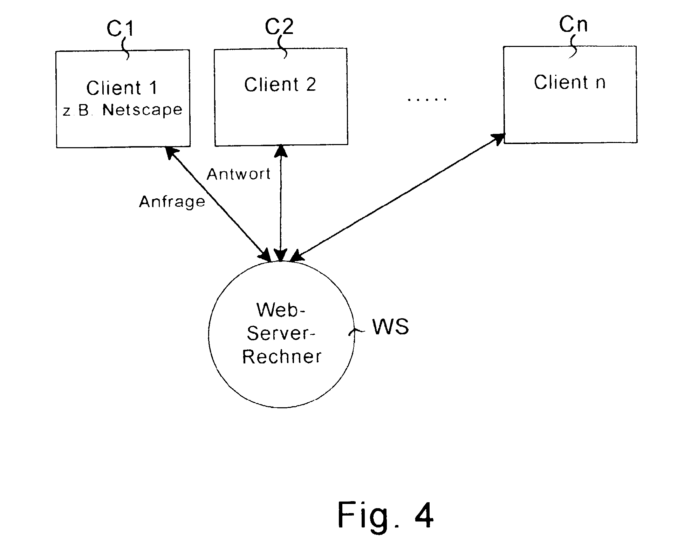

Das Prinzip eines CGI-Programms ist in Fig.4 schematisch dargestellt. Es werden Daten von mehreren Client-Rechnern C1, C2,...,Cn unter Anwendung eines Web-Browsers, z.B. Netscape Navigator, zu einem Web-Server-Rechner WS als Anfragen übertragen. Nach Ausführung von Berechnungen im Web-Server-Rechner WS werden Ergebnisse als Antworten wieder zu den einzelnen Client-Rechnern C1, C2,...,Cn zurück übertragen.

Prinzipiell gibt es zwei Möglichkeiten, Daten von einem Client-Rechner an den Web-Server-Rechner zu übertragen, nämlich unter Verwendung von GET-Requests und POST-Requests. Da einerseits die Menge der übertragbaren Daten bei GET-Requests beschränkt ist, andererseits aber unter Umständen größere Datenmengen zu übertragen sind, z.B. zur Spezifikation eigener Atmosphären, erfolgt diese Übertragung nach der Erfindung in vorteilhafter Weise mit der POST-Methode: (<form action="http://webserver/fascode.html"method="POST">, wobei in dem action-Attribut die aktuelle URL des CGI-Scripts anzugeben ist).

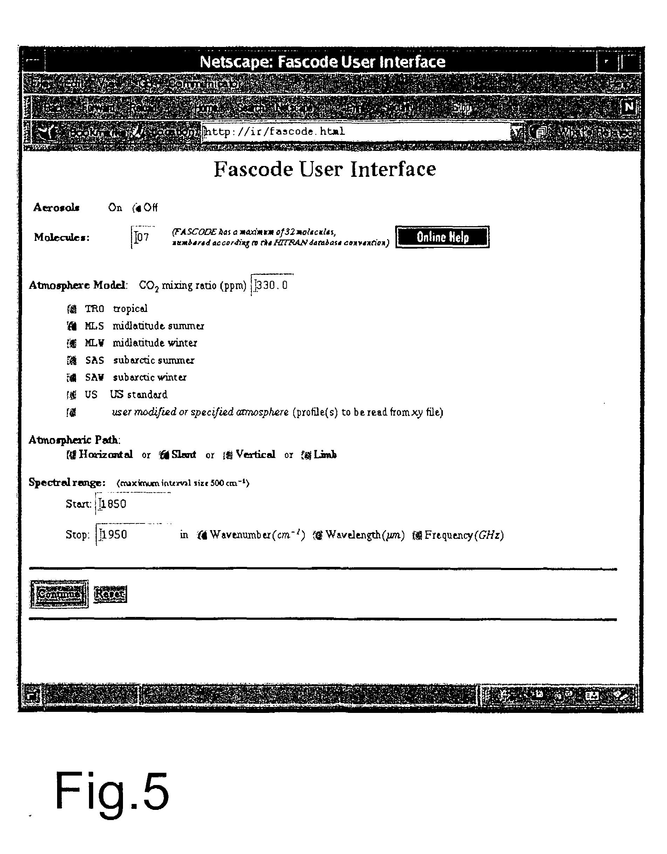

Aufgrund der Vielzahl der erforderlichen Angaben zur vollständigen Spezifikation des Strahlungstransports ist es sinnvoll, die Fragen zu strukturieren und in mehreren Schritten abzufragen. Beim Verfahren nach der Erfindung sind daher auf einem ersten Formblatt nur einige wenige, grundlegende Angaben zu machen, die für alle Strahlungstransportrechnungen relevant sind. In diesem Zusammenhang wird auf Fig.5 hingewiesen, welche die Start-Dokumentenseite eines Web-Interfaces für Strahlungstransportprogramme zeigt.

Weitere Formblätter werden in Abhängigkeit der vom Nutzer gegebenen Antworten automatisch generiert. Wählt der Nutzer beispielsweise einen Horizontalweg, d.h. konstante atmosphärische Bedingungen, so wird im nächsten Formblatt nur nach der Höhe des Beobachterstandorts und der Länge der Wegstrecke gefragt. Im Falle eines Schrägweges sind dagegen vom Nutzer drei Parameter zur vollständigen Charakterisierung des Weges durch die Atmosphäre zu machen: Beobachterhöhe, Beobachtungswinkel, Länge oder Endhöhe des Sichtstrahles.

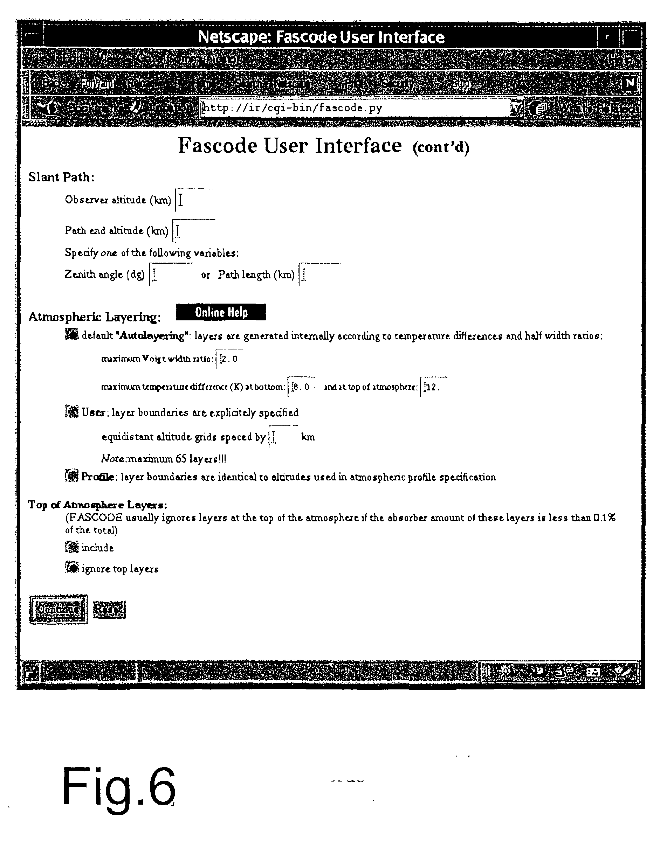

In diesem Zusammenhang wird auf Fig.6 hingewiesen, welche das zweite Formblatt eines Web-Interfaces für Strahlungstransportprogramme zeigt. Zusätzlich sind bei allen nichthorizontalen Wegkonfigurationen Angaben dahingehend nötig, mit welcher Genauigkeit die inhomogene Atmosphäre durch eine Reihe homogener Schichten (Curtis-Godson) genähert wird.

Werden die Nutzerangaben in einer Folge von Formblättern abgefragt, so müssen die bereits gegebenen Antworten gesichert werden. Beim Verfahren nach der Erfindung werden diese Angaben bei der automatischen Generierung des folgenden Formblattes als verstecktes Eingabeelement (<input type="hidden" name="..."value="...">) mit in diesem Formblatt aufgenommen, allerdings vom Web-Browser nicht gezeigt. Nachdem der Nutzer das Folgeformblatt komplett beantwortet hat, werden alle verborgenen alten Antworten zusammen mit den neuen Antworten an den Server-Rechner geschickt.

Anstatt jedem Formblatt ein eigenes CGI-Script zuzuordnen, werden beim Verfahren nach der Erfindung alle Formblätter von ein und demselben CGI-Script bearbeitet. Dies ist sinnvoll, da auch die alten, versteckten Antworten bei der Bearbeitung des Folgeformblattes berücksichtigt werden müssen, insbesondere auch, weil aus Sicherheitsgründen grundsätzlich alle, auch versteckte, Antworten auf ihre Korrektheit getestet werden sollen. Beim Verfahren nach der Erfindung erkennt das CGI-Script an einer zusätzlichen <input type="hidden" name="origin" value="...">-Marke den Ursprung des Formblattes.

Falls der Nutzer für die Strahlungstransportrechnung eigene, z.B. gemessene Druck-, Temperatur- oder Gaskonzentrationsdaten anstatt der Modellatmosphärendaten verwenden möchte, wird dies beim Verfahren nach der Erfindung durch die Möglichkeit eines "File-Uploads" unterstützt. Dazu benennt der Nutzer auf seinem Arbeitsplatz-Rechner auf dem Formblatt die Datei, die seine Daten enthält, und der Web-Browser sendet diese Datei zusammen mit den übrigen Nutzerangaben an den Web-Server-Rechner.

Beim Verfahren nach der Erfindung werden diese Atmosphärendaten in dem von FASCODE bzw. MODTRAN geforderten Format in die Eingabedatei eingearbeitet. Die Möglichkeit des "File-Uploads" wird in einem HTML-Formblatt durch ein <input type="file" name=>-Element realisiert, wobei im Formelement des HTML-Dokuments die POST-Methode und multipart/formdata als "encoding type" zu wählen ist: (<form action="..." method="POST" enctype="multipart/formdata">).

In analoger Weise kann der Nutzer eigene Aerosol-Daten (Extinktionskoeffizienten, Vertikalverteilung etc.) über die Web-Schnittstelle an das Strahlungstransport-Rechenprogramm übertragen.

Die Erstellung einer Eingabedatei für Strahlungstransportrechnungen wird wesentlich erleichtert, wenn dem Nutzer, soweit wie möglich, sinnvolle Defaultwerte präsentiert werden. Beim Verfahren nach der Erfindung werden daher auf den Formblättern entsprechende Werte im Input-Element durch "Value"-Attribute vorbelegt (<input value="...">). Analog werden in technisch bekannter Weise bei Auswahlmenüs (RadioButtons, CheckBoxes etc. ) Defaultwerte gesetzt.

Zusätzlich ist es sinnvoll, dem Nutzer durch die Gestaltung des Formblattes Hinweise zu geben, welche Art von Eingabe erwartet wird. Beim Verfahren nach der Erfindung werden daher an geeigneter Stelle Auswahlmenüs (z. B. RadioButtons, CheckBoxes, o.ä.) verwendet.

Bei der Bearbeitung von Formblättern ist es hilfreich, wenn diese zum einen jeweils vollständig und übersichtlich auf einer Bildschirmseite, d.h. ohne Notwendigkeit des Auf- bzw. Abwärtsblätterns, "Scrollen") sichtbar sind, zum anderen aber auch Erläuterungen, die insbesondere für neue Nutzer wichtig sind, gegeben werden. Beim Verfahren nach der Erfindung werden daher alle relevanten Zusatzinformationen, die den Umfang eines "kurzen" Formblatts übersteigen, auf einem zusätzlichen HTML-Dokument gespeichert, wobei die entsprechenden Abschnitte durch "innere" Anker direkt aus dem Formblatt abgerufen werden können.

Beim Verfahren nach der Erfindung werden alle Angaben des Nutzers auf ihre Korrektheit überprüft, d.h. Wertebereich einer Zahlenangabe (z.B. positiv, Integerzahl oder dergleichen), Vollständigkeit und Konsistenz. Bei fehlerhaften Angaben wird der Nutzer durch ein entsprechendes HTML-Dokument informiert und zur Korrektur bzw. Ergänzung oder dergleichen aufgefordert.

Wenn der Nutzer alle für die Strahlungstransportrechnung erforderlichen Angaben konsistent und fehlerfrei über die Formblätter an den Web-Server geschickt hat, wird auf dem Web-Server-Rechner ein neues temporäres Verzeichnis angelegt (unter UNIX z.B. unter \var\tmp, bei PYTHON systemunabhän-gig), in diesem die Fortran-formatierte Eingabe-Datei geschrieben; möglicherweise werden weitere erforderliche Dateien, z.B. die spektroskopische Datenbank, in dieses Verzeichnis kopiert bzw. "gelinkt", und schließlich wird das Strahlungstransportprogramm durch ein System-Kommando aufgerufen. Prinzipiell kann das Strahlungstransportprogramm sowohl auf dem Web-Server-Rechner als auch auf einem eigenen Compute-Server-Rechner laufen.

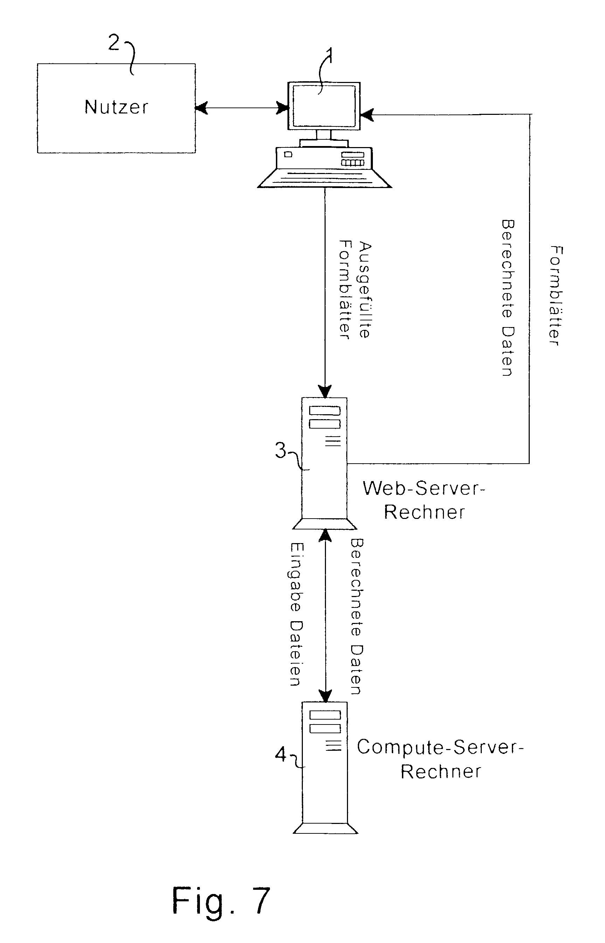

In diesem Zusammenhang wird auf Fig.7 hingewiesen, in welcher von einem Arbeitsplatz-Rechner 1 eines Nutzers 2 die von ihm ausgefüllten Formblätter mittels eines Web-Browsers zu einem Web-Server-Rechner 3 geschickt werden und Formblätter mit den unter Zuhilfenahme des Strahlungstransport-Rechenprogramms berechneten Daten vom Web-Server-Rechner 3 an den Arbeitsplatz-Rechner 1 des Nutzers 2 zurück übertragen werden. Die eigentliche Strahlungstransportrechnung läßt sich unter Einsatz des Strahlungstransport-Rechenprogramms entweder auf dem Web-Server-Rechner 3 selbst oder auf einem getrennten eigenen Compute-Server-Rechner 4 ausführen. Der Einfachheit halber wird im folgenden diese Unterscheidung fallengelassen.

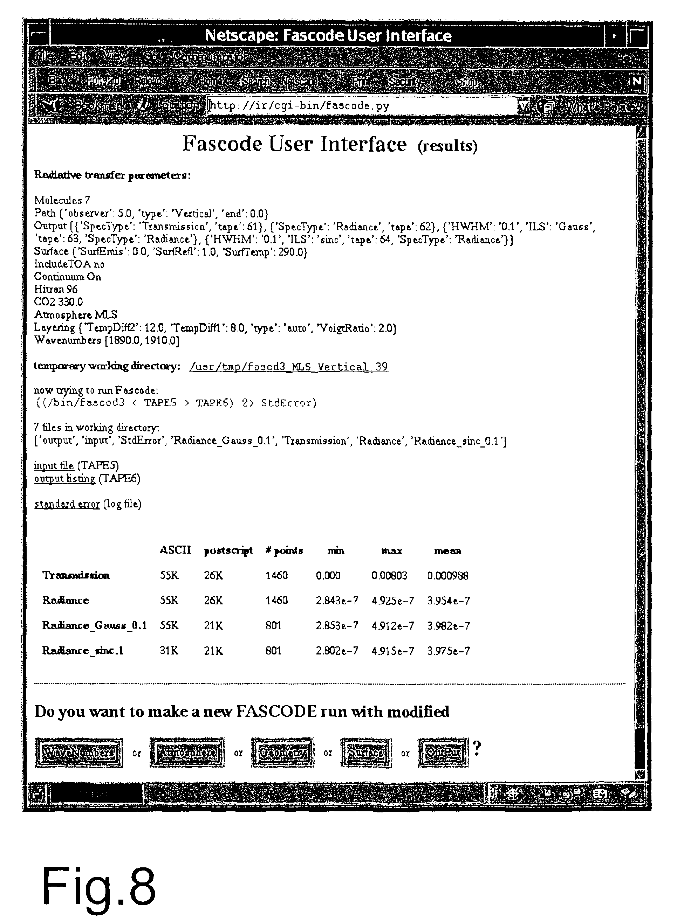

Nach Abschluß der Strahlungstransportrechnung werden die Ausgabedateien sinnvoll umbenannt und alle temporären Dateien gelöscht. Zur Unterstützung des Nutzers werden Plots der berechneten Spektren zum "QuickLook" erzeugt sowie Minimal-, Maximal- und Mittelwert-jedes Spektrums bestimmt. Alle diese Informationen werden auf einem automatisch erzeugten HTML-Ergebnisdokument zusammengefaßt. In diesem Zusammenhang wird auf Fig.8 hingewiesen, welche ein solches Ergebnis-Dokument zeigt. Der Nutzer hat insbesondere die Möglichkeit, alle Dateien auf seinem Arbeitsplatz-Rechner zu sichern ("download").

In vielen Fällen besteht die Notwendigkeit, eine Reihe von Strahlungstransportrechnungen mit geringfügig variierenden Bedingungen durchzuführen, z.B. zur Untersuchung des Strahlungstransports in verschiedenen Spektralbereichen oder zur Untersuchung des Einflusses der Beobachtungsgeometrie. Beim Verfahren nach der Erfindung besteht daher nach Abschluß einer Strahlungstransportrechnung die Möglichkeit, einen Parameter oder eine Gruppe von Parametern zu ändern, wobei jeweils alle anderen Parameter übernommen werden und als versteckte Eingabeelemente übertragen werden, und eine neue Strahlungstransportrechnung zu starten.

Insbesondere kann durch das CGI-Scriptprogramm eine Folge von FASCODE- bzw. MODTRAN-Rechnungen zur Simulation einer Limb-Sequenz oder zur Simulation der Effekte eines endlichen Gesichtsfeldes eines Spektrometers automatisiert werden.

Durch Sicherung der Eingabedatei einer Strahlungstransportrechnung kann diese zu einem späteren Zeitpunkt benutzt werden, um bei einer neuen Strahlungstransportrechnung alle Formblätter mit Defaultwerten zu versehen. Beim Verfahren nach der Erfindung wird dies durch "File-Upload" der auf dem Arbeitsplatz-Rechner des Nutzers gespeicherten Eingabedatei realisiert. Alternativ können Nutzerangaben auch vom Web-Server als sogenannte Cookies auf dem Arbeitsplatzrechner des Nutzers gespeichert werden.

In der Standardimplementierung von FASCODE kann nur eine einzige binäre spektroskopische Datenbasis für die Strahlungstransportrechnung verwendet werden. Beim Verfahren nach der Erfindung können mehrere Datenbasen, unter Umständen durch "File-Upload" eigener spektroskopischer Daten vom Arbeitsplatz-Rechner des Nutzers zum Web-Server-Rechner, benutzt werden. Die notwendigen Preprozessierungsschritte (Mischen bzw. Zusammenschneiden der Datenbasen, Umformatierungen etc.) werden automatisch vom CGI-Programm am Web-Server-Rechner durchgeführt.

In der Standardimplementierung von FASCODE bzw. MODTRAN kann Hintergrundstrahlung nur in der Form eines Schwarzstrahlers mit vorgegebener Temperatur (sowie Emissions- und Reflexionsgrad, d.h. $I_0(\nu) = \varepsilon B(\nu,\, T_{surf})$ + $\rho B(\nu,\, T_{env})$ in der Gleichung (2)) berücksichtigt werden. Beim Verfahren nach der Erfindung können beliebige, z.B. gemessene oder berechnete Spektren $I_{bg}(\nu)$ als Hintergrundterm einer Strahlungstransportrechnung verwendet werden, indem diese durch File-Upload vom Arbeitsplatz-Rechner an den Web-Server-Rechner übertragen werden und gemäß

$$I_{bg}(\nu)\tau(\nu) + I(\nu)$$

mit der neu berechneten Transmission r und Strahldichte I gekoppelt werden.

Bezugszeichenliste

| | |
|---|---|
| 1 | Arbeitsplatz-Rechner |
| 2 | Nutzer |
| 3 | Web-Server-Rechner |
| 4 | Compute-Server-Rechner |
| C1, C2,..., Cn | Client-Rechner |
| ws | Web-Server-Rechner |

**Patentansprüche**

1. Verfahren zur Durchführung einer Strahlungstransportrechnung, für welche die den Strahlungstransfer beeinflussenden Bedingungen von einem Nutzer spezifiziert und als Parameter für die Ausführung eines Strahlungstransport-Rechenprogramms angegeben werden, **dadurch gekennzeichnet**, daß das Verfahren über eine graphische Benutzeroberfläche mittels einer CGI(Common Gateway Interface)-Schnittstelle zwischen einem Web-Browser an einem Arbeitsplatz-Rechner (1) des Nutzers (2) und einem Web-Server-Rechner (3) abgewickelt wird, daß alle die Strahlungstransportrechnung definierenden Parameter in einer Folge von automatisch generierten Formblättern vom Nutzer auf dem Web-Browser seines Arbeitsplatz-Rechners spezifiziert werden, daß vom Web-Server-Rechner mit den vom Nutzer gegebenen Spezifikationen die für das Strahlungstransport-Rechenprogramm erforderliche Eingabedatei in einem vom Strahlungstransport-Rechenprogramm geforderten Format erstellt wird, daß über ein Systemkommando das Strahlungstransport-Rechenprogramm auf dem Web-Server-Rechner oder gegebenenfalls einem eigenen Compute-Server-Rechner (4) aufgerufen wird, wobei gegebenenfalls zusätzlich erforderliche, auf dem Web-Server-Rechner gespeicherte Dateien an das Strahlungstransport-Rechenprogramm gekoppelt werden, und daß schließlich vom Web-Server-Rechner die dort errechneten Ergebnisse zum Arbeitsplatz-Rechner des Nutzers zurückgeschickt werden und dort auf einem automatisch generierten Dokument bereitgestellt werden.

2. Verfahren nach Anspruch 1, **dadurch gekennzeichnet**, daß alle im Zusammenhang mit dem Ergebnis relevanten Ausgabedateien, insbesondere die berechneten Spektren, vom Nutzer (2) auf seinem Arbeitsplatz-Rechner (1) beim Herunterladen ("download") gesichert werden.

**3.** Verfahren nach Anspruch 1 oder 2, **gekennzeichnet durch** die Benutzung von Standard-HTML-Elementen und Standard-CGI-Scriptprogrammen.

**4.** Verfahren nach einem der vorhergehenden Ansprüche, **dadurch gekennzeichnet**, daß zusätzliche Daten, die typischerweise vom Nutzer (2) in Form einer oder mehrerer Dateien auf seinem Arbeitsplatz-Rechner (1) gespeichert sind, z.B. Atmosphären-Daten, Aerosol-Daten oder dergleichen, durch Dateiübertragung ("File-Upload") dem Web-Server-Rechner (3) eingegeben werden und bei der Erstellung der Eingabedatei für das Strahlungstransport-Rechenprogramm berücksichtigt werden bzw. beim Aufruf des Strahlungstransport-Rechenprogramms an dieses gekoppelt werden.

**5.** Verfahren nach einem der vorhergehenden Ansprüche, **dadurch gekennzeichnet**, daß an sich nicht Bestandteil des Verfahrens darstellende Pre- und/oder Post-Prozessierungsschritte, z.B. eine Kombination spektraler Datenbasen oder die Berücksichtigung eines Hintergrundspektrums, automatisch vom CGI-Scriptprogramm mitübernommen werden.

**6.** Verfahren nach einem der vorhergehenden Ansprüche, **dadurch gekennzeichnet**, daß zur Vereinfachung weiterer Strahlungstransportrechnungen bisherige Antworten des Nutzers (2) bei der Generierung der Formblätter als Defaultwerte benutzt werden.

**7.** Verfahren nach Anspruch 6, **dadurch gekennzeichnet**, daß zu diesem Zweck eine Dateiübertragung ("File-Upload") der auf dem Arbeitsplatz-Rechner (1) des Nutzers (2) gespeicherten Eingabedatei vorgenommen wird.

**8.** Verfahren nach Anspruch 6, **dadurch gekennzeichnet**, daß zu diesem Zweck Nutzerangaben vom Web-Server-Rechner (3) als sogenannte Cookies auf dem Arbeitsplatz-Rechner (1) gespeichert werden.

**9.** Verfahren nach einem der vorhergehenden Ansprüche, **dadurch gekennzeichnet**, daß als Strahlungstransport-Rechenprogramm das Programm FASCODE, LOWTRAN oder MODTRAN eingesetzt wird.

**10.** Verfahren nach einem der Ansprüche 1 bis 8, **dadurch gekennzeichnet**, daß es auf andere Strahlungstransport-Rechenprogramme wie z.B. GENLN2 übertragen wird.

**11.** Verfahren nach einem der vorhergehenden Ansprüche, **dadurch gekennzeichnet**, daß die Strahlungstransportrechnung für den UV- bis Millimeterwellenbereich, insbesondere im Infrarotbereich oder in benachbarten Spektralbereichen, durchgeführt wird.

**12.** Anwendung des Verfahrens nach einem der vorhergehenden Ansprüche im atmosphärischen Bereich.

```
$ IR transmission and/or radiance
    1    1    1    1    1    1    0    1    0    1    0    0    0    0
    0.9960    5.0040                                                      -
     3.000    0.000                        1.000
    0    2    0    0    0   20                                    330.000
   12.000   50.000   30.000
     2.00     8.00    12.00     0.00     0.00
    25    US standard ClO increased by 10%
   12.000 0.000e+00    0.000    66   66666666666666666A66
0.000E+00 0.000E+00 0.000E+00 0.000E+00 0.000E+00 0.000E+00 0.000E+00 0.000E+00
0.000E+00 0.000E+00 0.000E+00 0.000E+00 0.000E+00 0.000E+00 0.000E+00 0.000E+00
0.000E+00 3.498E-08 0.000E+00 0.000E+00 0.000E+00 0.000E+00 0.000E+00 0.000E+00
   13.000 0.000e+00    0.000    66   66666666666666666A66
0.000E+00 0.000E+00 0.000E+00 0.000E+00 0.000E+00 0.000E+00 0.000E+00 0.000E+00
0.000E+00 0.000E+00 0.000E+00 0.000E+00 0.000E+00 0.000E+00 0.000E+00 0.000E+00
0.000E+00 6.171E-08 0.000E+00 0.000E+00 0.000E+00 0.000E+00 0.000E+00 0.000E+00
   14.000 0.000e+00    0.000    66   66666666666666666A66
0.000E+00 0.000E+00 0.000E+00 0.000E+00 0.000E+00 0.000E+00 0.000E+00 0.000E+00
0.000E+00 0.000E+00 0.000E+00 0.000E+00 0.000E+00 0.000E+00 0.000E+00 0.000E+00
0.000E+00 1.099E-07 0.000E+00 0.000E+00 0.000E+00 0.000E+00 0.000E+00 0.000E+00


    ....


   47.500 0.000e+00    0.000    66   66666666666666666A66
0.000E+00 0.000E+00 0.000E+00 0.000E+00 0.000E+00 0.000E+00 0.000E+00 0.000E+00
0.000E+00 0.000E+00 0.000E+00 0.000E+00 0.000E+00 0.000E+00 0.000E+00 0.000E+00
0.000E+00 1.716E-04 0.000E+00. 0.000E+00 0.000E+00 0.000E+00 0.000E+00 0.000E+00
   50.000 0.000e+00    0.000    66   66666666666666666A66
0.000E+00 0.000E+00 0.000E+00 0.000E+00 0.000E+00 0.000E+00 0.000E+00 0.000E+00
0.000E+00 0.000E+00 0.000E+00 0.000E+00 0.000E+00 0.000E+00 0.000E+00 0.000E+00
0.000E+00 1.144E-04 0.000E+00 0.000E+00 0.000E+00 0.000E+00 0.000E+00 0.000E+00
    0         1        18         0.000
     0.001    1.0000    5.0000    1    2                12                82
     0.001    1.0000    5.0000    1    4                12                83
    -1.000
User defined atmosphere;  Slant 12.0km to 50.0 km with 30.0dg
     1.0000    5.0000                          12              0
     0.0000    1.0000                               1    0           3 61
     1.0000    5.0000                          82              0
     0.0000    1.0000                               1    0           3 62
     1.0000    5.0000                          83              0
     0.0000    1.0000                               1    0           3 63
    -1.000
%
```

# Fig.1

EP 1 111 354 A1

```
$ IR transmission and/or radiance
    1    1    1    0    0    0    0    1    0    1    0    0    0    0 -
1850.0000 1950.0000
    2    1    0    0    0    7                                        330.000
    0.500                          1.000
MLS,  1.0km Horizontal at 0.5km
1850.0000 1950.0000                                12              0
    0.0000    1.0000                                    0    0         3 61
    -1.000
%
```

# Fig.2

```
#!/bin/csh -f
ln -s  /opt/sw/ir/hitran96  ./TAPE3
ln -s  horiz.in  TAPE5
/usr/local/bin/fascod3 < TAPE5 > TAPE6
mv TAPE6    horiz.out
mv TAPE61   horiz.trans
rm TAPE3
rm TAPE5
rm TAPE12
```

# Fig.3

C1         C2                Cn

Client 1
z.B. Netscape

Client 2

. . . . .

Client n

Antwort

Anfrage

Web-
Server-
Rechner   WS

# Fig. 4

## Fig.5

# Fascode User Interface (cont'd)

**Slant Path:**

Observer altitude (km) [ ]

Path end altitude (km) [ ]

Specify *one* of the following variables:

Zenith angle (dg) [ ]     or  Path length (km) [ ]

**Atmospheric Layering:**     `Online Help`

- default **"Autolayering"**: layers are generated internally according to temperature differences and half width ratios:

  maximum Voigt width ratio: [ 2.0 ]

  maximum temperature difference (K) at bottom: [ 8.0 ]   and at top of atmosphere: [ 12. ]

- **User**: layer boundaries are explicitly specified

  equidistant altitude grids spaced by [ ]    km

  *Note*: maximum 65 layers!!!

- **Profile**: layer boundaries are identical to altitudes used in atmospheric profile specification

**Top of Atmosphere Layers:**
(FASCODE usually ignores layers at the top of the atmosphere if the absorber amount of these layers is less than 0.1% of the total)

- include
- ignore top layers

`Continue`  `Reset`

# Fig.6

Fig. 7

Fig.8

**Europäisches Patentamt**

## EUROPÄISCHER RECHERCHENBERICHT

Nummer der Anmeldung

EP 99 12 4735

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 887 750 A (FUJITSU) 31. Dezember 1998 (1998-12-31) * Spalte 3, Zeile 36 - Spalte 5, Zeile 58; Abbildungen 1,2 * | 1 | G01J1/00 G01J5/00 G01W1/00 G01N21/53 |
| A | * Zusammenfassung * | 2-8 | |
| D,Y | US 5 315 513 A (L.W. ABREU ET AL) 24. Mai 1994 (1994-05-24) * Spalte 4, Zeile 47 - Spalte 5, Zeile 58 * | 1 | |
| A | * Zusammenfassung * | 2,4,9-12 | |
| A | "OZON FORMATION USING OZIP" 'Online! XP002136116 Retrieved from the Internet: <URL: http://www.shodor.org/ekma/model/ozipintro .html> 'retrieved on 2000-04-19! * "Introduction" und "Overview" * | 1-4 | |
| A | "MODTRAN VIA FTP" 'Online! XP002136117 Retrieved from the Internet: <URL: http://imkpcdemo.fzk.de/isys-public/Softwa re-tools/Modtran/ftp_get.htm> 'retrieved on 2000-04-19! * das ganze Dokument * | 1,9 | RECHERCHIERTE SACHGEBIETE (Int.Cl.7) G01J G01W G01N G06F |

Der vorliegende Recherchenbericht wurde für alle Patentansprüche erstellt

| Recherchenort | Abschlußdatum der Recherche | Prüfer |
|---|---|---|
| DEN HAAG | 19. April 2000 | De Buyzer, H |

**ANHANG ZUM EUROPÄISCHEN RECHERCHENBERICHT
ÜBER DIE EUROPÄISCHE PATENTANMELDUNG NR.**

EP 99 12 4735

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2000

| Im Recherchenbericht angeführtes Patentdokument | Datum der Veröffentlichung | Mitglied(er) der Patentfamilie | Datum der Veröffentlichung |
|---|---|---|---|
| EP 0887750 A | 30-12-1998 | JP 11015767 A | 22-01-1999 |
| US 5315513 3 A | | KEINE | |

Für nähere Einzelheiten zu diesem Anhang : siehe Amtsblatt des Europäischen Patentamts, Nr.12/82